# EUROPEAN PATENT SPECIFICATION

(11) **EP 4 167 170 B1**
(45) Date of publication and mention of the grant of the patent: **13.11.2024**
(21) Application number: 21825052.0
(22) Date of filing: 26.04.2021
(51) Int. Cl.: G06Q 30/06, G06T 7/73

(54) **MONITORING DEVICE, MONITORING METHOD, AND COMPUTER PROGRAM**
ÜBERWACHUNGSVORRICHTUNG, ÜBERWACHUNGSVERFAHREN UND COMPUTERPROGRAMM
DISPOSITIF DE SURVEILLANCE, PROCÉDÉ DE SURVEILLANCE, ET PROGRAMME INFORMATIQUE

(30) Priority: 15.06.2020 JP 2020103135
(43) Date of publication of application: 19.04.2023
(73) Proprietor: Panasonic Intellectual Property Management Co., Ltd., Osaka-shi, Osaka 540-6207 (JP)
(72) Inventor: YANAGI, Kazuhiro, Osaka-shi, Osaka 540-6207 (JP); TAKAGI, Takefumi, Osaka-shi, Osaka 540-6207 (JP); KAKIZAWA, Tetsurou, Osaka-shi, Osaka 540-6207 (JP)
(74) Representative: Eisenführ Speiser
(86) International application number: PCT/JP2021/016608
(87) International publication number: WO 2021/256090

(56) References cited:
- WO-A1-2016/117600
- WO-A1-2019/140091
- JP-A- 2002 366 621
- JP-A- 2002 366 621
- JP-A- 2016 194 833
- JP-A- 2016 194 833
- US-A1- 2020 151 421

## Description

### TECHNICAL FIELD

The present disclosure relates to a monitoring device, a monitoring method, and a computer program.

### BACKGROUND ART

In a shelf installed in a store for displaying commodities (hereinafter, referred to as a "display shelf"), sections in which the commodities are to be placed are determined in advance as a shelf allocation. However, a situation may occur in which a commodity is placed in a wrong section of the display shelf (hereinafter, referred to as "misplacement") due to a store clerk placing a commodity in a wrong section or a customer placing a commodity once taken from the display shelf in a wrong section. For this reason, the store clerk performs a work of checking whether misplacement has occurred on the display shelf and/or placing the misplaced commodity in a correct section. This work is a heavy burden on the store clerk.

In order to reduce the work load, there has been a technique of comparing information indicating shelf allocation of a display shelf (information indicating which commodity is to be placed in which section of which display shelf; also referred to as a planogram) with information indicating an actual placement state of commodities on the display shelf (also referred to as a realogram), and determining whether the commodities are placed in correct sections of the display shelf.

For example, Patent Literature 1 discloses analyzing an image of a display shelf captured by a camera device to specify a placement state of commodities on the display shelf, and outputting an error when the specified placement state of the commodities is different from a correct placement state of the commodities on the display shelf.

### CITATION LIST

### PATENT LITERATURE

Patent Literature 1: WO2016/117600

Document WO2019140091 discloses systems, methods, and devices for capturing, collecting, and analysing images of products displayed in retail stores. Document WO2016117600 discloses a shelf space rate management apparatus for managing assignment of goods and determines whether goods arrangement inspection is performed based on determination result of condition determination unit.Document JP2002366621 discloses a method that involves producing management information for transmission to headquarters terminal, based on audio data and image data received from shop terminals.

### SUMMARY OF INVENTION

### TECHNICAL PROBLEM

However, the technique disclosed in Patent Literature 1 outputs an error even when the placement state of the commodities is slightly different from the correct placement state of the commodities on the display shelf. Therefore, an error is output even when the difference between the placement state of the commodities and the correct placement state of the commodities on the display shelf is acceptable to human sense (for example, a case where a commodity slightly protrudes from the correct placement position). As a result, the work for the store clerk to return the commodity to the correct section of the display shelf is increased, which conversely increases the amount of work of the store clerk.

An object of the present disclosure is to flexibly control determination of misplacement of commodities on a display shelf.

### SOLUTION TO PROBLEM

A monitoring device according to an aspect of the present disclosure is a monitoring device for monitoring placement of an article, and includes: an image acquisition unit configured to acquire an image in which the article is imaged when the article is placed; a display section setting unit configured to set a display section in the image, the display section being a section in which the article is to be displayed; an intermediate section setting unit configured to set an intermediate section adjacent to the display section in the image, the intermediate section being a section used for determining misplacement of the article; an article detection unit configured to detect an article area from the image, the article area being an image area of the article; and a misplacement determination unit configured to determine whether the detected article area is misplaced in a correlation with the display section based on a positional correlation between the article area and the intermediate section in a case where at least a part of the detected article area does not overlap the display section.

A monitoring method according to an aspect of the present disclosure is a monitoring method for monitoring placement of an article by a device, and includes: acquiring an image in which the article is imaged when the article is placed; setting a display section in the image, the display section being a section in which the article is to be displayed; setting an intermediate section adjacent to the display section in the image, the intermediate section being a section used for determining misplacement of the article; detecting an article area from the image, the article area being an image area of the article; and determining whether the detected article area is misplaced in a correlation with the display section based on a positional correlation between the article area and the intermediate section in a case where at least a part of the article area does not overlap the display section.

A computer program according to an aspect of the present disclosure is a computer program for monitoring placement of an article, and causes a computer to execute a process of: acquiring an image in which the article is imaged when the article is placed; setting a display section in the image, the display section being a section in which the article is to be displayed; setting an intermediate section adjacent to the display section in the image, the intermediate section being a section used for determining misplacement of the article; detecting an article area from the image, the article area being an image area of the article; and determining whether the detected article area is misplaced in a correlation with the display section based on a positional correlation between the article area and the intermediate section in a case where at least a part of the article area does not overlap the display section.

These comprehensive or specific aspects may be implemented by a system, a device, a method, an integrated circuit, a computer program, or a recording medium, or may be implemented by any combination of the system, the device, the method, the integrated circuit, the computer program, and the recording medium.

### ADVANTAGEOUS EFFECTS OF INVENTION

According to the present disclosure, it is possible to flexibly control determination of misplacement of commodities on a display shelf.

### BRIEF DESCRIPTION OF DRAWINGS

[Fig. 1] Fig. 1 is a schematic diagram illustrating a configuration example of a monitoring system according to an embodiment.
[Fig. 2] Fig. 2 is a functional block diagram illustrating a configuration example of a monitoring device according to the present embodiment.
[Fig. 3] Fig. 3 is a diagram for illustrating setting of a display section with respect to a shelf image and detection of an article area.
[Fig. 4] Fig. 4 is a diagram illustrating an example of a configuration of shelf allocation information.
[Fig. 5] Fig. 5 is a diagram for illustrating setting of an intermediate section with respect to the shelf image.
[Fig. 6] Fig. 6 is a flowchart illustrating an example of an operation of a misplacement determination unit.
[Fig. 7] Fig. 7 is a flowchart illustrating an example of overlap determination.
[Fig. 8] Fig. 8 is a diagram for illustrating upper and lower margin sections.
[Fig. 9] Fig. 9 is a flowchart illustrating an example of misplacement determination.
[Fig. 10A] Fig. 10A is a first diagram for illustrating details of overlap analysis.
[Fig. 10B] Fig. 10B is a second diagram for illustrating details of overlap analysis.
[Fig. 11] Fig. 11 is a diagram for illustrating a first modification of the misplacement determination.
[Fig. 12A] Fig. 12A is a first diagram for illustrating a second modification of the misplacement determination.
[Fig. 12B] Fig. 12B is a second diagram for illustrating the second modification of the misplacement determination.
[Fig. 13] Fig. 13 is a diagram illustrating a hardware configuration of a computer for implementing functions of the monitoring device by a program.

### DESCRIPTION OF EMBODIMENTS

Hereinafter, an embodiment of the present disclosure will be described in detail with reference to the drawings as appropriate. However, an unnecessarily detailed description may be omitted. For example, detailed descriptions of well-known matters and repeated descriptions of substantially the same configurations may be omitted. This is to avoid unnecessary redundancy in the following description and to facilitate understanding for those skilled in the art. The accompanying drawings and the following description are provided for those skilled in the art to fully understand the present disclosure, and are not intended to limit the subject matter described in the claims.

### (Present Embodiment)

### <Configuration of Monitoring System>

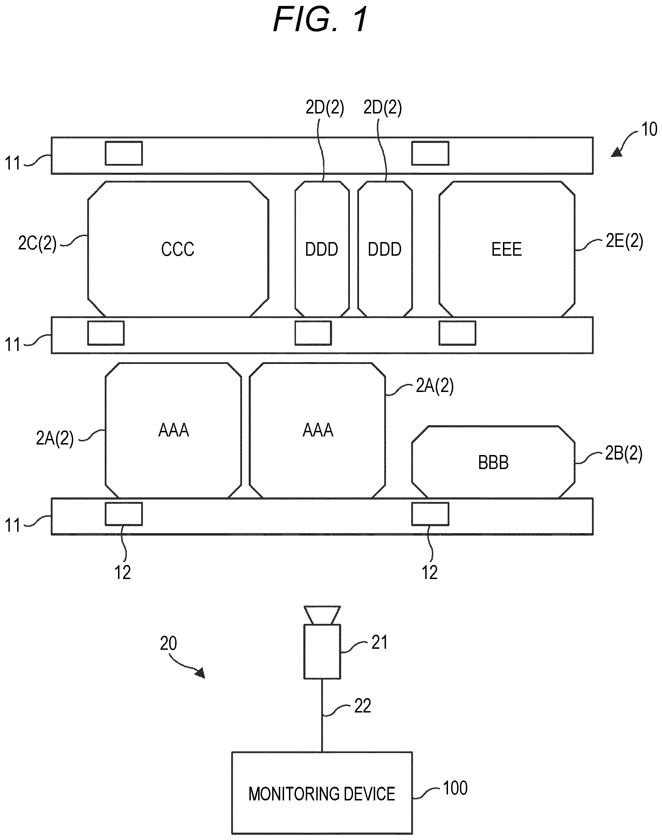

Fig. 1 is a schematic diagram illustrating a configuration example of a monitoring system 20 according to an embodiment.

For example, a store is provided with a display shelf 10 for displaying articles 2. The monitoring system 20 is a system that monitors the placement state of the articles 2 on the display shelf 10. The articles 2 may be interpreted as another term such as commodities or objects. Examples of the articles 2 include various articles such as daily goods, foods, drinks, medicines, miscellaneous goods, and books.

The display shelf 10 includes shelf stages 11 for placing the articles 2, and shelf labels 12 placed on the front side of the shelf stages 11. Each shelf label 12 presents, for example, the name, price, and the like of an article 2. The shelf label 12 may also present a QR code (registered trademark) for acquiring information on the article 2.

The monitoring system 20 includes a monitoring device 100 and at least one camera device 21. The camera device 21 and the monitoring device 100 can transmit and receive data to and from each other via a wired and/or wireless communication network 22. Examples of the communication network 22 include a wired LAN (local area network), a wireless LAN, a mobile communication network, and the Internet.

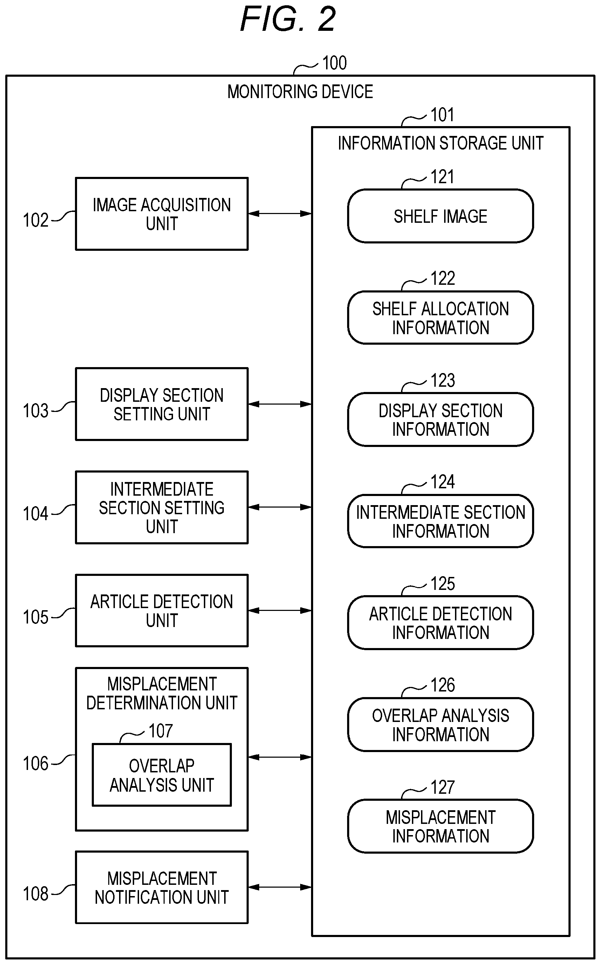

The camera device 21 periodically images the display shelf 10, and transmits captured image data (hereinafter referred to as "shelf image") 121 (see Fig. 2) to the monitoring device 100. The shelf image 121 may be either a still image or a video.

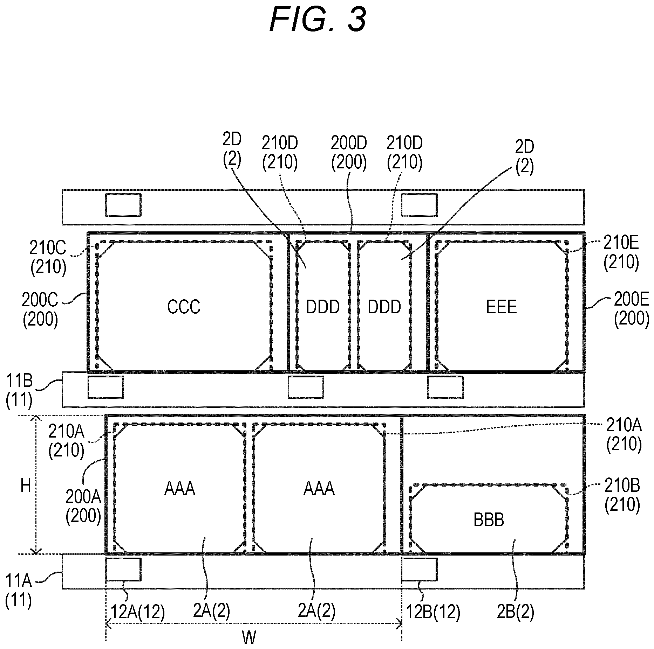

The monitoring device 100 receives the shelf image 121 from the camera device 21. The monitoring device 100 monitors the placement state of the articles 2 on the display shelf 10 based on the received shelf image 121. When it is detected that a certain article 2 is placed in a section different from a section 200 (see Fig. 3) in which the article 2 is to be displayed (hereinafter, referred to as "display section") on the display shelf 10 (hereinafter, referred to as "misplacement"), the monitoring device 100 may notify, for example, a terminal possessed by a store clerk of the occurrence of the misplacement (hereinafter, referred to as "misplacement notification"). Accordingly, the store clerk can quickly notice the occurrence of the misplacement due to the misplacement notification and return the misplaced article 2 to the display section 200.

The device in related art as disclosed in Patent Literature 1 performs misplacement notification even when the article 2 is slightly deviated from the display section 200. That is, the misplacement notification is performed even when the article 2 is deviated from the display section 200 in manner acceptable to human sense. As a result, the frequency of the misplacement notification to the store clerk is too high, which conversely increases the burden on the store clerk.

In view of the above problem, the monitoring device 100 according to the present embodiment controls the determination of the misplacement of the article 2 with respect to the display section 200 based on the positional correlation between the article 2 and the display section 200. As a result, the misplacement notification is also controlled, which can prevent the increase in the burden on the store clerk. Hereinafter, the monitoring device 100 according to the present embodiment will be described.

### <Configuration of Monitoring Device>

Fig. 2 is a functional block diagram illustrating a configuration example of the monitoring device 100 according to the present embodiment.

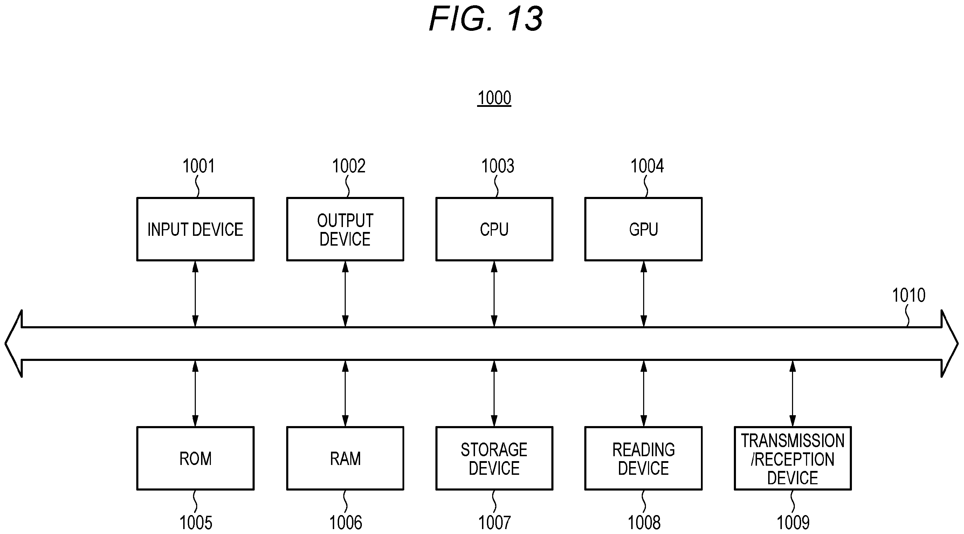

The monitoring device 100 includes functions of an information storage unit 101, an image acquisition unit 102, a display section setting unit 103, an intermediate section setting unit 104, an article detection unit 105, a misplacement determination unit 106, and a misplacement notification unit 108. These functions may be implemented by a cooperative operation of hardware included in the monitoring device 100 (see Fig. 13).

The information storage unit 101 stores information and data to be handled by the monitoring device 100. The information storage unit 101 may be implemented by the RAM 1006 and the storage device 1007 illustrated in Fig. 13.

The image acquisition unit 102 receives the shelf image 121 from the camera device 21 via the communication network 22, and stores the shelf image 121 in the information storage unit 101.

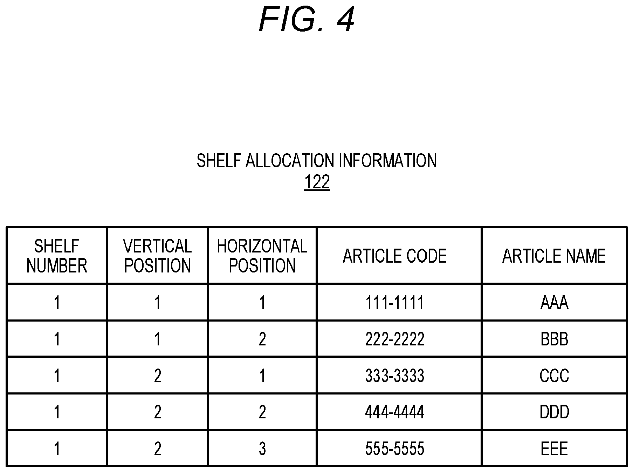

The display section setting unit 103 sets the display section 200 (see Fig. 3) in the shelf image 121 based on the shelf allocation information 122 stored in the information storage unit 101. The shelf allocation information 122 is information indicating which article 2 is to be placed in which section of the display shelf 10. The details of the shelf allocation information 122 will be described later (see Fig. 4). The display section setting unit 103 generates display section information 123 including information on the set display section 200, and stores the display section information 123 in the information storage unit 101. The display section 200 may be set at a timing at which the camera device 21 is installed and/or at any timing. Details of the display section setting unit 103 will be described later.

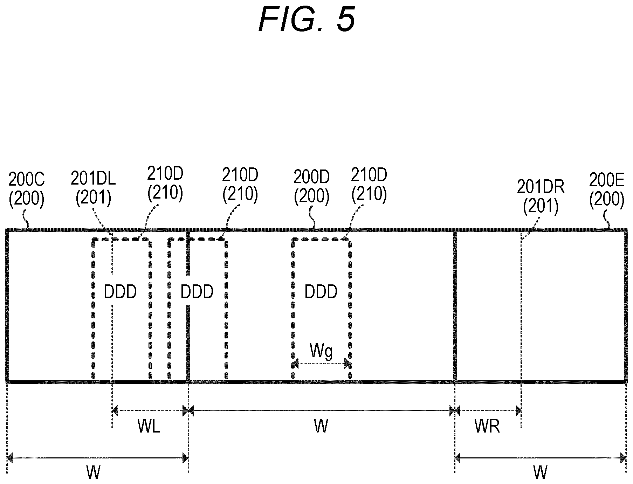

The intermediate section setting unit 104 sets intermediate sections 201 (see Fig. 5) in the shelf image 121. Each intermediate section 201 is a section used for determination of misplacement of the articles 2, and is set adjacent to the display section 200. The intermediate section setting unit 104 generates intermediate section information 124 including information on the set intermediate sections 201, and stores the intermediate section information 124 in the information storage unit 101. Details of the intermediate section setting unit 104 and the intermediate section 201 will be described later.

The article detection unit 105 performs image analysis on the shelf image 121 and detects an image of the article 2. The article detection unit 105 generates article detection information 125 including an image area of the detected article 2 (hereinafter referred to as an "article area") 210 (see Fig. 3) and identification information on the detected article 2 (hereinafter referred to as" article information"), and stores the information in the information storage unit 101.

The misplacement determination unit 106 determines whether each article area 210 included in the article detection information 125 is misplaced in the correlation with the display section 200. The misplacement determination unit 106 generates misplacement information 127 indicating the determination result of the misplacement, and stores the misplacement information 127 in the information storage unit 101.

The misplacement determination unit 106 may include an overlap analysis unit 107. The overlap analysis unit 107 analyzes the overlap of the article area 210 with respect to the display section 200 and the intermediate section 201. The overlap analysis unit 107 generates overlap analysis information 126 indicating the analysis result, and stores the overlap analysis information 126 in the information storage unit 101. In this case, the misplacement determination unit 106 may determine whether the article area 210 is misplaced in the correlation with the display section 200 based on the overlap analysis information 126. Details of the misplacement determination unit 106 and the overlap analysis unit 107 will be described later.

The misplacement notification unit 108 performs misplacement notification based on the misplacement information 127. The misplacement notification may include the number of the display shelf 10 in which the article 2 determined to be misplaced (hereinafter, referred to as "misplaced article") is present. Alternatively, the misplacement notification may include an image obtained by adding a frame indicating the article area 210 of the misplaced article 2 to the shelf image 121. The misplacement notification is transmitted to, for example, a terminal possessed by the store clerk. Accordingly, the store clerk can recognize the occurrence of the misplacement upon receiving the misplacement notification and return the misplaced article 2 to the correct display section 200.

### <Setting of Display Section>

Next, setting of the display section 200 will be described in detail with reference to Figs. 3 and 4. Fig. 3 is a diagram for illustrating setting of the display section 200 with respect to the shelf image 121 and detection of the article area 210. Fig. 4 is a diagram illustrating an example of the configuration of the shelf allocation information 122.

As illustrated in Fig. 3, a section to display (display section 200) is determined for each article 2 in advance on the display shelf 10. That is, a certain determined article 2 is placed in a certain display section 200.

The display section 200 may be determined based on the position of the shelf label 12 on the display shelf 10. For example, a display section 200A of an article 2A indicated by a shelf label 12A may be a rectangular section, whose horizontal width W is the distance from the left end of the shelf label 12A to the left end of a shelf label 12B located to the right of the shelf label 12A, and whose vertical width H is the distance from a shelf stage 11A attached with the shelf label 12A to a shelf stage 11B located above the shelf stage 11A. In a case where the article 2A is placed up to the upper portion of the display shelf 10, there is no shelf stage 11B located above. In this case, the vertical width of the display section may be estimated based on the vertical width H in another shelf. Specifically, it may be considered that the vertical width is the same as the vertical width H of another shelf, or an average value of the other vertical widths may be considered as the vertical width.

The shelf allocation information 122 is information indicating a correspondence correlation between the display section 200 on the display shelf 10 and the article information on the article 2 to be placed in the display section 200. For example, as illustrated in Fig. 4, the shelf allocation information 122 includes, as data items, a shelf number, a vertical position, a horizontal position, an article code, and an article name.

The shelf number is a number for identifying the display shelf 10. The vertical position indicates the position of the display section 200 in the vertical direction, and is, for example, a value with the lowermost shelf stage 11 of the display shelf 10 being "1" and increasing by 1 per stage toward the uppermost shelf stage 11. The horizontal position indicates the position of the display section 200 in the horizontal direction, and is, for example, a value with the leftmost position being "1" and increasing by 1 per stage toward the right in a certain shelf stage 11. That is, the vertical position and the horizontal position are information for identifying the position of the display section 200 on the display shelf 10 indicated by the shelf number. The article code indicates a code for identifying an article. The article name indicates the name of the article. The article code and the article name are examples of the article information.

For example, the first row of the shelf allocation information 122 illustrated in Fig. 4 indicates the following. That is, the article 2A having the article code "111-1111" and the article name "AAA" is to be placed in the display section 200A (see Fig. 3) at the vertical position "1" and the horizontal position "1" on the display shelf 10 having the shelf number "1". For example, the fourth row of the shelf allocation information 122 illustrated in Fig. 4 indicates the following. That is, the article 2D having the article code "444-4444" and the article name "DDD" is to be placed in the display section 200B (see Fig. 3) at the vertical position "2" and the horizontal position "2" on the display shelf 10 having the shelf number "1".

The display section setting unit 103 sets the display section 200 with respect to the shelf image 121 based on the shelf allocation information 122. For example, the display section setting unit 103 sets a section in the shelf image 121 corresponding to the shelf number "1", the vertical position "1", and the horizontal position "1" indicated by the shelf allocation information 122 to the display section 200A of the article 2A indicated by the article code "111-1111" and the article name "AAA". For example, the display section setting unit 103 sets a section in the shelf image 121 corresponding to the shelf number "1", the vertical position "2", and the horizontal position "2" indicated by the shelf allocation information 122 to the display section 200D of the article 2D indicated by the article code "444-4444" and the article name "DDD".

The display section setting unit 103 may detect the shelf labels 12 on the display shelf 10 by image recognition, wireless communication, or the like, and set the display section 200 using the positions of the shelf labels 12. For example, when the shelf label 12A is detected from the shelf image 121, the display section setting unit 103 sets, as the display section 200A, a section present to the upper right of the position where the shelf label 12A is detected. The display section setting unit 103 may determine which display section 200 corresponds to the shelf label 12A based on the detected position of the shelf label 12 and the shelf allocation information 122. In addition, the display section setting unit 103 may recognize the article name corresponding to the shelf label 12 by reading characters of the shelf label 12 by optical character recognition (OCR) or using a wireless communication function provided to the shelf label 12 per se, and may set the display section 200 based on the article name. In the present embodiment, since the shelf label 12 is placed to the lower left of each display section 200, the display section 200 corresponding to the shelf label 12 is set to the upper right of each position where the shelf label 12 is detected. However, the setting may be performed according to other rules when the shelf labels 12 are placed according to such rules. For example, when adopting a rule that the shelf labels 12 are placed on the lower right side of each display section 200, the display section setting unit 103 may set a section positioned to the upper left of the shelf label 12A as the display section 200A.

The display section setting unit 103 may set the display section 200 on the display shelf 10 based on the shelf image 121 obtained by imaging the display shelf 10 in which the articles 2 are placed correctly. For example, the display section setting unit 103 detects articles 2 from the shelf image 121, and sets a section in which the common article 2A is detected as the display section 200A of the article 2A. Alternatively, the display section setting unit 103 may detect articles 2 from left to right for each shelf stage 11 from the shelf image 121, and set a section in which the common article 2A is detected continuously as one display section 200A. In this case, the position at which the different article 2B is detected may be set as the start position of the new display section 200B. In this case, since the positions of the shelf labels 12 are not used for setting the display sections 200, the display section setting unit 103 can also set the display sections 200 for the shelf image 121 of a display shelf 10 on which no shelf labels 12 are placed.

The article detection unit 105 performs image analysis for detecting the article 2 with respect to the shelf image 121, and detects the article area 210. For the image analysis for detecting the article 2, an image recognition technique based on pattern matching or artificial intelligence may be used. In addition, in the image recognition technology based on artificial intelligence, a learner generated in advance by deep learning may be used.

For example, the article detection unit 105 detects an article area 210A of an article name "AAA", an article area 210B of an article name "BBB", an article area 210C of an article name "CCC", an article area 210D of an article name "DDD", and an article area 210E of an article name "EEE" from the shelf image 121 illustrated in Fig. 4. Then, the article detection unit 105 generates article detection information 125 by associating the position of each article area 210 in the shelf image 121 with the article name (that is, article information) of the article area 210.

### <Setting of Intermediate Section>

Fig. 5 is a diagram for illustrating the setting of the intermediate section 201 with respect to the shelf image 121. Here, the description will be made focusing on the display section 200D, but the same applies to the other display sections 200A, 200B, 200C, and 200E.

The intermediate section setting unit 104 sets an intermediate section 201DL on the left side of the display section 200D and an intermediate section 201DR on the right side of the display section 200D. The intermediate sections 201DL and 201DR are used to determine misplacement of the article 2D (article area 210D) to be placed in the display section 200D.

A width WL of the intermediate section 201DL is equal to or smaller than a width W of the display section 200C on the left side of the display section 200D. The width WL of the intermediate section 201DL may also be the same as the width W of the display section 200C on the left side. A width WR of the intermediate section 201DR is equal to or smaller than a width W of the display section 200E on the right side of the display section 200D. The width WR of the intermediate section 201DR may be the same as the width W of the display section 200E on the right side. Here, the intermediate section 201DL and the intermediate section 201DR are typically sections used for determining, in a case where an article is displayed while protruding from the display section 200D, whether the protrusion is acceptable. Regarding the state in which the article to be placed in the display section 200D protrudes to a position exceeding the width of the display section 200C on the left side or the display section 200E on the right side, it is unnatural to determine such state as "not misdisplayed". Therefore, in the present embodiment, the width WL of the intermediate section 201DL and the width WR of the intermediate section 201DR are set to be equal to or smaller than the widths of the adjacent display sections, respectively. The widths WL, WR of the respective intermediate sections 201DL, 201DR can be narrowed to narrow an area that may be determined as "not misdisplayed", and can be broadened to broaden the area that may be determined as "not misdisplayed". Therefore, the widths WL, WR of the respective intermediate sections 201DL, 201DR may be adjustable depending on the degree of strictness for determining misdisplay. Further, the widths WL, WR of the respective intermediate sections 201DL, 201DR may be individually adjustable. In this way, it is possible to make a difference in the strictness of the determination for each of the intermediate sections 201DL, 201DR.

The widths WL, WR of the intermediate sections 201DL, 201DR may be set uniformly. In this way, the widths WL, WR of the intermediate sections 201DL, 201DR do not need to be adjusted individually, and thus the width of the intermediate section 201 can be set easily.

Alternatively, the widths WL, WR of the intermediate sections 201DL, 201DR may be set in accordance with the width W of the display section 200D. Alternatively, the widths WL, WR of the intermediate sections 201DL, 201DR may be set to n1% (0 ≤ n1 ≤ 100) of the width W of the display section 200D. Alternatively, the widths WL, WR of the intermediate sections 201DL, 201DR may be set in accordance with a width Wg of the article area 210D to be placed in the display section 200D. For example, the widths WL, WR of the intermediate sections 201DL, 201DR may be set to n2% (0 ≤ n2 ≤ 100) of the width Wg of the article area 210D to be placed in the display section 200D.

In general, an article having a larger width is more likely to protrude to an adjacent section. For example, in a case where one article cannot be placed in the display section 201D and is unavoidably placed in an adjacent section, the width occupied by the article increases as the width Wg of the article increases. In such case, if intermediate sections 201 having the same widths WL, WR as those for an article having a small width Wg are set to an article area 210 of an article having a large width Wg, the article area 210 protrudes from the intermediate sections 201 and cannot be determined appropriately. In contrast, if intermediate sections 201 having the same widths WL, WR as those for an article having a large width Wg are set to an article having a small width Wg, the determination is "not misdisplayed" even when multiple articles are placed in adjacent sections, which is against human sense. Such problem can be solved by setting the width WL, WR of the intermediate sections 201 in accordance with the width Wg of the article. Here, there is a high possibility that the width Wg of the article is proportional to the width W of the display section 200 in which the article is to be placed, and there is at least a low possibility that a narrow display section 200 is allocated to an article having a large width Wg. Therefore, by setting the width WL, WR of the intermediate sections 201 in accordance with the width W of the display section 200, it is easy to set intermediate sections 201 having width proportional to the width Wg of the article Wg. Further, if the article area 210 can be detected correctly, the widths WL, WR of the intermediate sections 201 may be set in accordance with the width Wg of the article area 210 to be placed in the display section 200. Thereby, the magnitude of the width Wg of the article can be strictly reflected to the widths WL, WR of the intermediate sections 201.

The widths WL, WR of the intermediate sections 201 may be set individually for the respective display sections 200. The width WL and the width WR of the intermediate sections 201 may be set to the same value or may be set to different values. The values of the widths WL, WR of the intermediate sections 201DL, 201DR may be represented with numbers of pixels.

In the case of using any of the above methods, the widths WL, WR of the intermediate sections 201 may be set to not exceed the widths of the display sections 200 overlapping the intermediate sections 201 (that is, the sections in which adjacent articles are to be displayed). Further, in the case where the widths WL, WR of the intermediate sections 201 calculated or set with the above methods exceed the widths of the display sections 200 overlapping the intermediate sections 201, the exceeding part may be cut out to be unified to the same values as the widths of the display sections 200 overlapping the intermediate sections 201. This is because the intermediate sections 201 are areas that may be determined as not misplaced. Therefore, if the intermediate sections 201 are set to exceed the display sections 200 overlapping the intermediate sections 201, it may be determined as not misplaced even when there is a large misplacement that an article protrudes to an area in which a second-adjacent article is to be placed.

The intermediate section setting unit 104 may set a group including a plurality of display sections 200 as an intermediate section 201. For example, the intermediate section setting unit 104 may define a plurality of display sections 200 of the same shelf stage 11 as one group and set the group as an intermediate section 201. Alternatively, the intermediate section setting unit 104 may define a plurality of display sections 200 in which designated articles (for example, articles of the same manufacturer) are displayed as one group, and set the group as an intermediate section 201. Such a setting may be performed in a case where, for example, the manufacturer or the like that provides the articles requires placement on a specific shelf stage 11, but allows any placement in the shelf stage 11. In this case, the misplacement determination unit 106 may not determine that an article 2 is misplaced even when the article 2 is placed in a section different from the display section 200 of the article 2 in the group set as the intermediate section 201. That is, the misplacement determination unit 106 may permit swap of the placement of the articles 2 in the group.

### <Details of Operation of Misplacement Determination Unit>

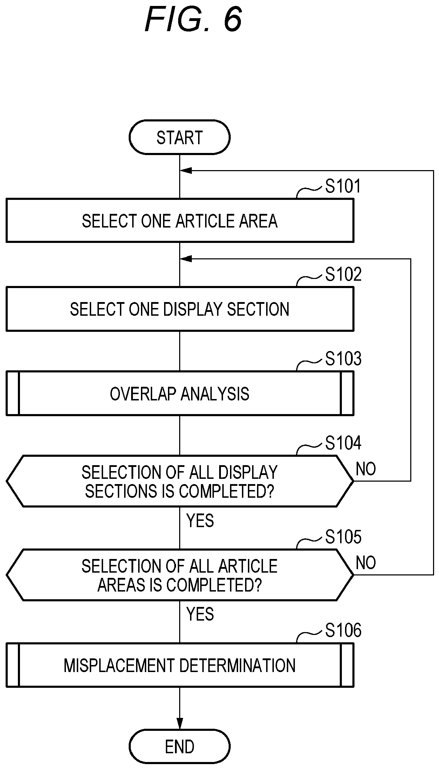

Fig. 6 is a flowchart illustrating an example of the operation of the misplacement determination unit 106. Next, an example of processing of the misplacement determination unit 106 will be described with reference to Fig. 6.

The misplacement determination unit 106 refers to the article detection information 125 and selects one article area 210 to be processed from among the plurality of article areas 210 detected from the shelf image 121 (S101).

The misplacement determination unit 106 refers to the display section information 123 and selects one display section 200 to be processed from among the plurality of display sections 200 set in the shelf image 121 (S102).

The overlap analysis unit 107 performs overlap analysis on the display section 200 selected in S102 for the article area 210 selected in S101 (S 103). The details of the overlap analysis will be described later.

The misplacement determination unit 106 determines whether the selection of all the display sections 200 is completed (S104). When any unselected display section 200 remains (S104: NO), the misplacement determination unit 106 returns to the process of S102 and selects one of the remaining display sections 200 as a processing target. When the selection of all the display sections 200 is completed (S104: YES), the misplacement determination unit 106 proceeds to the process of the following S105.

The misplacement determination unit 106 determines whether the selection of all the article areas 210 is completed (S105). When any unselected article area 210 remains (S105: NO), the misplacement determination unit 106 returns to the process of S101 and selects one of the remaining article areas 210 as a processing target. When the selection of all the article areas 210 is completed (S105: YES), the misplacement determination unit 106 proceeds to the process of the following S106.

The misplacement determination unit 106 executes misplacement determination in each display section 200 (S106). Details of the misplacement determination will be described later. Then, the misplacement determination unit 106 ends the process.

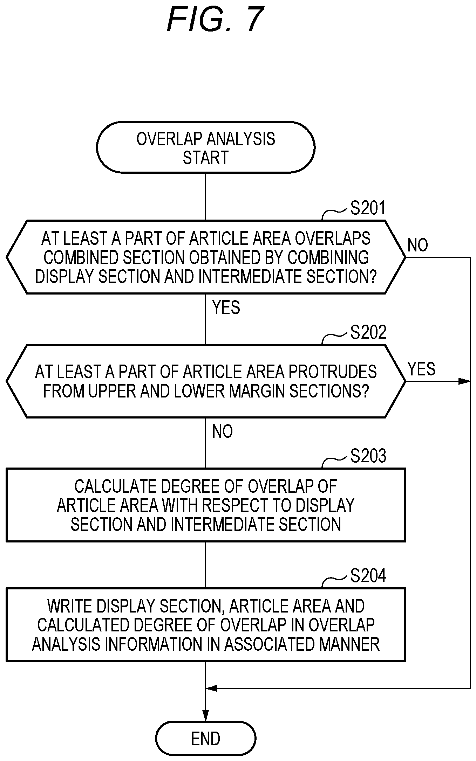

Fig. 7 is a flowchart illustrating an example of the overlap analysis. The flowchart corresponds to the details of the process of S103 of Fig. 6. In the description of the flowchart, the article area 210 is selected in S101 of Fig. 6, and the display section 200 is selected in S102 of Fig. 6.

The overlap analysis unit 107 determines whether at least a part of the article area 210 overlaps a section obtained by combining the display section 200 and the intermediate section 201 adjacent to the display section 200 (hereinafter, referred to as a "combined section") (S201).

When the article area 210 does not overlap the combined section (S201: NO), the overlap analysis unit 107 ends the process. In this case, the article area 210 is determined as overlapping in another combined section. When at least a part of the article area 210 overlaps the combined section (S201: YES), the overlap analysis unit 107 proceeds to the process of the following S202.

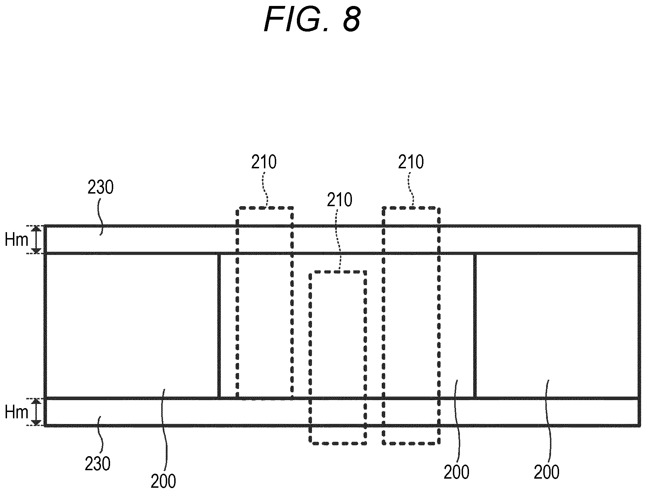

The overlap analysis unit 107 determines whether at least a part of the article area 210 protrudes from upper and lower margin sections 230 (see Fig. 8) (S202). As illustrated in Fig. 8, the upper and lower margin sections 230 may be set with a predetermined vertical width Hm above and below the display section 200. The vertical width Hm of the upper margin section 230 and the vertical width Hm of the lower margin section 230 may be common or may be different from each other. Further, the margin sections 230 may be not set. In this case, the overlap analysis unit 107 proceeds to the process of S203 without executing the process of S202.

When at least a part of the article area 210 protrudes from the margin sections 230 as illustrated in Fig. 8 (S202: YES), the overlap analysis unit 107 ends the process. That is, the overlap analysis unit 107 does not perform the overlap analysis on the article area 210. When the article area 210 does not protrude from the margin sections 230 (S202: NO), the overlap analysis unit 107 proceeds to the process of the following S203. In the display shelf 10 of the present embodiment, the width of the shelf stage 11 in the upper-lower direction is limited by a shelf board or the like, and the placement of the articles 2 in the upper-lower direction is more physically restricted than the placement of the articles 2 in the horizontal direction. Therefore, in a case where the protrusion occurs in the upper-lower direction, there is a high possibility that an article 2 having a height different from that of the article 2 to be originally placed is placed, and there is a high possibility that such placement is misplacement without the necessity of determining whether the placement is acceptable. Therefore, in the present embodiment, when the protrusion occurs in the upper-lower direction, the process of the overlap analysis, which leads to the determination of whether the protrusion is acceptable, is not performed. In a case where the size of the article area 210 in the upper-lower direction can be variously changed, for example, in a case where any number of articles 2 can be stacked or the angles of the articles 2 to be displayed can be changed, a result against the feeling of the store clerk is obtained if the protrusion in the upper-lower direction is evaluated strictly. In such a case, the process of S202 may be omitted.

The overlap analysis unit 107 calculates the degree of overlap of the article area 210 with respect to the display section 200 and the intermediate section 201 (S203). Details of the calculation of the degree of overlap will be described later.

The overlap analysis unit 107 writes, in the overlap analysis information 126, the display section 200 and the article area 210 and the calculated degree of overlap in an associated manner (S204). Then, the overlap analysis unit 107 ends the process.

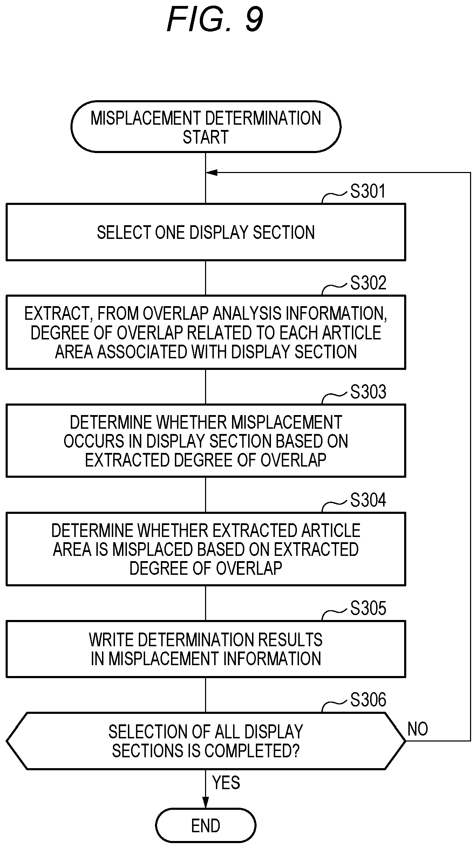

Fig. 9 is a flowchart illustrating an example of misplacement determination. The flowchart corresponds to the details of the process of S106 in Fig. 6.

The misplacement determination unit 106 refers to the display section information 123 and selects one display section 200 to be processed from among the plurality of display sections 200 set in the shelf image 121 (S301).

A misdisplay determination unit extracts, from the overlap analysis information 126, each article area 210 associated with the display section 200 selected in S301 and the degree of overlap related to the article area 210 (S302).

The misplacement determination unit 106 determines whether misplacement of the article area 210 occurs in the display section 200 selected in S301, based on the degree of overlap extracted in S302 (S303).

The misplacement determination unit 106 determines whether the article area 210 extracted in S301 is misplaced based on the degree of overlap extracted in S302 (S304). Details of the method for determining the misplacement based on the degree of overlap will be described later.

The misplacement determination unit 106 writes the determination results of S303 and S304 in the misplacement information 127 (S305). As described above, the misplacement information 127 is used for misplacement notification by the misplacement notification unit 108.

The misplacement determination unit 106 determines whether the selection of all the display sections 200 is completed (S306). When any unselected display section 200 remains (S306: NO), the misplacement determination unit 106 returns to the process of S301 and selects one of the remaining display sections 200 as a processing target. When the selection of all the display sections 200 is completed (S306: YES), the misplacement determination unit 106 ends the process.

### <Details of Overlap Analysis>

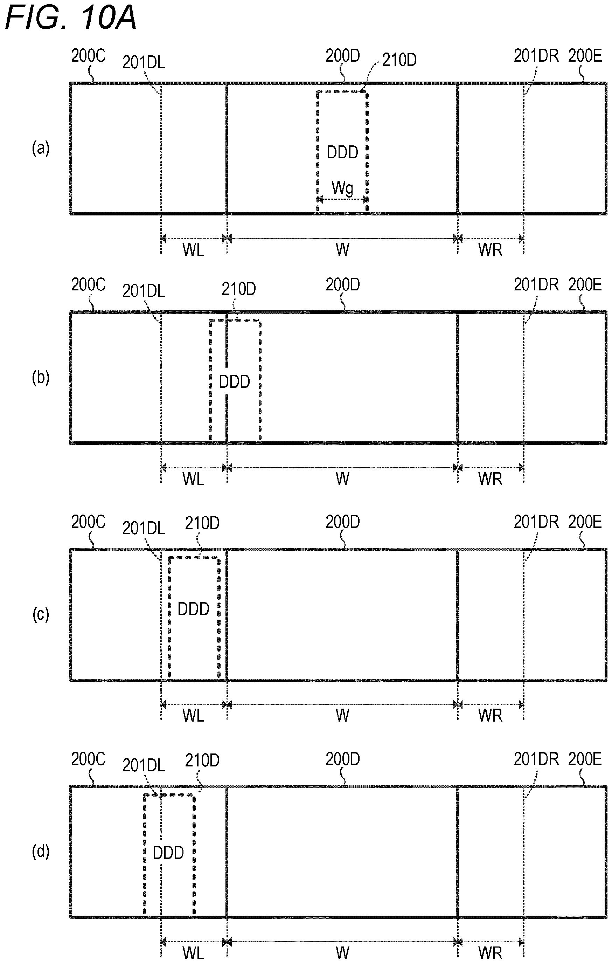

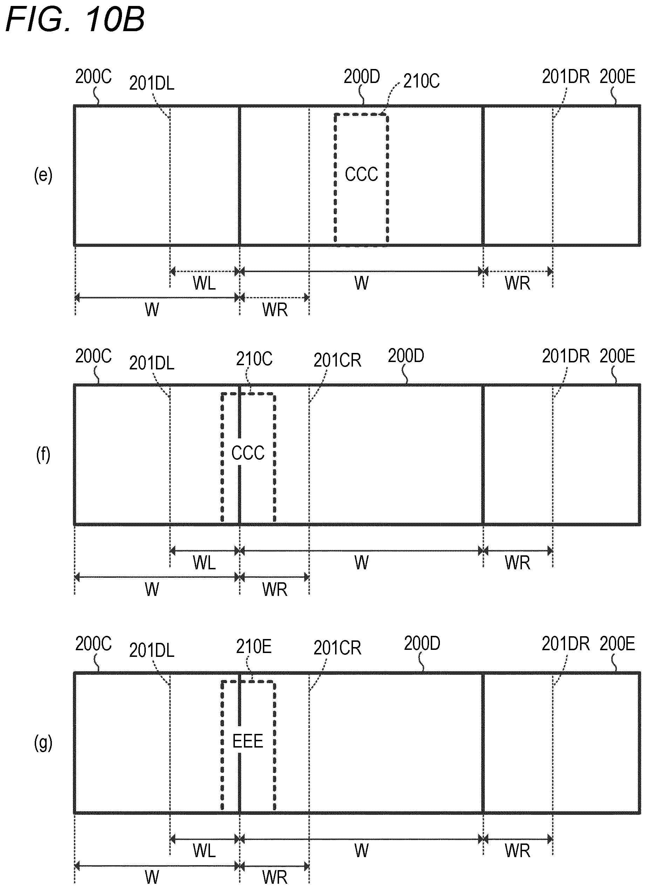

Figs. 10A and 10B are diagrams for illustrating details of the overlap analysis. Next, an example of the overlap analysis in a case where the article area 210D and the display section 200D are selected as the processing targets of the overlap analysis will be described in detail with reference to Figs. 10A and 10B.

When 100% of the article area 210D overlaps the display section 200D as illustrated in (a) of Fig. 10A, the overlap analysis unit 107 calculates the degree of overlap in the correlation between the article area 210D and the display section 200D as follows. That is, the overlap analysis unit 107 calculates the degree of overlap of the article area 210D with respect to the display section 200D as "1.0", the degree of overlap of the article area 210D with respect to the intermediate section 201DL as "0", and the degree of overlap of the article area 210D with respect to the intermediate section 201DR as "0".

The degree of overlap of the article area 210D with respect to the display section 200D may mean the degree of overlap of the width Wg of the article area 210 with respect to the width W of the display section 200D. The degree of overlap of the article area 210D with respect to the intermediate section 201DL may mean the degree of overlap of the width Wg of the article area 210D with respect to the width WL of the intermediate section 201DL. The degree of overlap of the article area 210D with respect to the intermediate section 201DR may mean the degree of overlap of the width Wg of the article area 210D with respect to the width WR of the intermediate section 201DR. Alternatively, the degree of overlap of the article area 210D with respect to the display section 200D may mean the degree of overlap of the area of the article area 210 with respect to the area of the display section 200D. The degree of overlap of the article area 210D with respect to the intermediate section 201DL may mean the degree of overlap of the area of the article area 210D with respect to the area of the intermediate section 201DL. The degree of overlap of the article area 210D with respect to the intermediate section 201DR may mean the degree of overlap of the area of the article area 210D with respect to the area of the intermediate section 201DR.

When 70% of the article area 210D overlaps the display section 200D and 30% of the article area 210D overlaps the intermediate section 201DL as illustrated in (b) of Fig. 10A, the overlap analysis unit 107 calculates the degree of overlap in the correlation between the article area 210D and the display section 200D as follows. That is, the overlap analysis unit 107 calculates the degree of overlap of the article area 210D with respect to the display section 200D as "0.7", the degree of overlap of the article area 210D with respect to the intermediate section 201DL as "0.3", and the degree of overlap of the article area 210D with respect to the intermediate section 201DR as "0".

When 100% of the article area 210D overlaps the intermediate section 201DL as illustrated in (c) of Fig. 10A, the overlap analysis unit 107 calculates the degree of overlap in the correlation between the article area 210D and the display section 200D as follows. That is, the overlap analysis unit 107 calculates the degree of overlap of the article area 210D with respect to the display section 200D as "0", the degree of overlap of the article area 210D with respect to the intermediate section 201DL as "1.0", and the degree of overlap of the article area 210D with respect to the intermediate section 201DR as "0".

When at least a part of the article area 210D protrudes from the intermediate section 201DL as illustrated in (d) of Fig. 10A, the overlap analysis unit 107 may not calculate the degree of overlap in the correlation between the article area 210D and the display section 200D. In this case, since the article area 210D overlaps the display section 200C by 100%, the degree of overlap in the correlation between the article area 210D and the display section 200C is calculated.

When 100% of the article area 210C overlaps the display section 200D as illustrated in (e) of Fig. 10B, the overlap analysis unit 107 calculates the degree of overlap in the correlation between the article area 210C and the display section 200D as follows. That is, the overlap analysis unit 107 calculates the degree of overlap of the article area 210C with respect to the display section 200D as "1.0", the degree of overlap of the article area 210C with respect to the intermediate section 201DL as "0", and the degree of overlap of the article area 210C with respect to the intermediate section 201DR as "0".

When 70% of the article area 210C overlaps the display section 200D and 30% of the article area 210C overlaps the intermediate section 201DL as illustrated in (f) of Fig. 10B, the overlap analysis unit 107 calculates the degree of overlap in the correlation between the article area 210C and the display section 200D as follows. That is, the overlap analysis unit 107 calculates the degree of overlap of the article area 210C with respect to the display section 200D as "0.7", the degree of overlap of the article area 210C with respect to the intermediate section 201DL as "0", and the degree of overlap of the article area 210C with respect to the intermediate section 201DR as "0". Since the article 2C in article area 210C is not the article 2D to be displayed in the display section 200D, the intermediate sections 201DL, 201DR are ignored. In this case, the overlap analysis unit 107 calculates the degree of overlap of the article area 210C with respect to the display section 200C as "0.3" and the degree of overlap of the article area 210C with respect to the intermediate section 201CR as "0.7".

When 70% of the article area 210E overlaps the display section 200D and 30% of the article area 210E overlaps the display section 200C as illustrated in (g) of Fig. 10B, the overlap analysis unit 107 calculates the degree of overlap of the article area 210E with the display section 200D and the degree of overlap of the article area 210E with the display section 200E as follows. That is, the overlap analysis unit 107 calculates the degree of overlap of the article area 210E with respect to the display section 200D as "0.7", the degree of overlap of the article area 210E with respect to the intermediate section 201DL as "0", and the degree of overlap of the article area 210E with respect to the intermediate section 201DR as "0". In addition, the overlap analysis unit 107 calculates the degree of overlap of the article area 210E with respect to the display section 200C as "0.3" and the degree of overlap of the article area 210E with respect to the intermediate section 201CR as "0".

The degree of overlap in the correlation between the article area 210 and the display section 200 described above is written in the overlap analysis information 126.

### <Details of Misplacement Determination>

Next, an example of the misplacement determination in a case where the display section 200D is selected as the processing target of the misplacement determination will be described in detail.

In the case where the display section 200D is selected as the processing target of the misplacement determination, the misplacement determination unit 106 performs the misplacement determination on an article area 210 whose degree of overlap with the display section 200D is greater than 0. The misplacement determination unit 106 associates the article area 210 determined as misplaced with the appropriate display section 200, thereby setting the determination result of the article area 210 as the determination result for the display section 200. This process is performed in different procedures as described below depending on whether the article area 210 is to be displayed in the display section 200D to be processed.

### «Case where Article Area is to be Displayed in Display Section to be Processed»

The misplacement determination unit 106 sets the determination result for the article area 210 as the determination result for the display section 200 to be processed. Details of the determination will be described below.

When the sum of the degree of overlap of the article area 210D with respect to the display section 200D, the degree of overlap of the article area 210D with respect to the intermediate section 201DL, and the degree of overlap of the article area 210D with respect to the intermediate section 201DR (hereinafter, referred to as "total degree of overlap") is equal to or greater than a predetermined threshold T, the misplacement determination unit 106 may determine that the article area 210D is not misplaced (that is, placed correctly). In other words, the misplacement determination unit 106 may determine that the article area 210D is misplaced in a case where the total degree of overlap related to the article area 210D is smaller than the threshold T.

Even in a case where the article area 210D satisfies the above-described condition of correct placement, the misplacement determination unit 106 may determine that the article area 210D is suspected as being misplaced (hereinafter referred to as "suspectable placement") when the degree of overlap of the article area 210D with respect to the display section 200D is smaller than the sum of the degree of overlap of the article area 210D with respect to the intermediate section 201DL and the degree of overlap of the article area 210D with respect to the intermediate section 201DR. In a situation where the degree of overlap is such, there is a high possibility that the entire placement of the articles 2 is deviated from the original placement to either the left or the right if the reason is that the degree of overlap with respect to the display section 200D is low, and there is a high possibility that the articles 2 are excessively placed if the sum of the degree of overlap with respect to the intermediate section 201DL and the degree of overlap of the article area 210D with respect to the intermediate section 201DR is large. In either case, the relative positional correlation with the other articles 2 is not incorrect, and the degree of urgency of the correction is not as high as that of the misplacement. Therefore, a notification may be issued indicating suspectable placement to distinguish from misplacement. In addition, as described above, a different notification may be performed for each reason for being determined as suspectable placement because the assumed situation may be different for each reason. If not necessary to be distinguished from other states, the suspectable placement may be determined as correct placement or the misplacement. In addition, whether it is necessary to distinguish the suspectable placement from the other states may be switched by an instruction of the store clerk or the like.

For example, in the case of (a) of Fig. 10A, the article area 210D is to be displayed in the display section 200D. The degree of overlap of the article area 210D with respect to the display section 200D is " 1.0", the degree of overlap of the article area 210D with respect to the intermediate section 201DL is" 0", and the degree of overlap of the article area 210D with respect to the intermediate section 201DR is "0". For example, when the threshold T is set to "0.8", the total degree of overlap" 1.0" related to the article area 210D is equal to or greater than the threshold T "0.8". In addition, the degree of overlap "1.0" of the article area 210D with respect to the display section 200D is equal to or greater than the sum "0" of the degree of overlap "0" of the article area 210D with respect to the intermediate section 201DL and the degree of overlap "0" of the article area 210D with respect to the intermediate section 201DR. Therefore, the misplacement determination unit 106 may determine that the article area 210D is placed correctly.

For example, in the case of (b) of Fig. 10A, the article area 210D is to be displayed in the display section 200D. The degree of overlap of the article area 210D with respect to the display section 200D is "0.7", the degree of overlap of the article area 210D with respect to the intermediate section 201DL is "0.3", and the degree of overlap of the article area 210D with respect to the intermediate section 201DR is "0". Therefore, the total degree of overlap of the article area 210D is " 1.0", which is equal to or greater than the threshold T "0.8". In addition, the degree of overlap "0.7" of the article area 210D with respect to the display section 200D is equal to or greater than the sum "0.3" of the degree of overlap "0.3" of the article area 210D with respect to the intermediate section 201DL and the degree of overlap "0" of the article area 210D with respect to the intermediate section 201DR. Therefore, the misplacement determination unit 106 may determine that the article area 210D is placed correctly.

For example, assume that the degree of overlap of the article area 210D with respect to the display section 200D is "0.2", the degree of overlap of the article area 210D with respect to the intermediate section 201DL is "0.8", and the degree of overlap of the article area 210D with respect to the intermediate section 201DR is "0". In this case, the total degree of overlap of the article area 210D is "1.0", which is equal to or greater than the threshold T "0.8". However, the degree of overlap "0.2" of the article area 210D with respect to the display section 200D is smaller than the sum "0.8" of the degree of overlap "0.8" of the article area 210D with respect to the intermediate section 201DL and the degree of overlap "0" of the article area 210D with respect to the intermediate section 201DR. Therefore, the misplacement determination unit 106 may determine that the article area 210D is a suspectably placed.

### «Case where Article Area is not to be Displayed in Display Section to be Processed»

The misplacement determination unit 106 needs not only to determine that the article area 210C is misplaced, but also to determine with respect to which display section 200 the misplacement is. This is because, unlike the case where the article area 210 is to be displayed in the display section 200 to be processed, the display section 200 overlapped with the article area 210C does not include a section clearly associated with the article area 210C. Therefore, the misplacement determination unit 106 determines which display section 200 is associated with the determination result of the misplacement based on the degree of overlap between the article area 210C and each display section 200 to be processed. For example, when the degree of overlap of the article area 210C with respect to the display section 200D is "1.0", it may be determined that the article area 210C is misplaced with respect to the display section 200D. In addition, in a case where the article area 210C is misplaced across a plurality of display sections 200, it may be basically determined that the misplacement is with respect to a display section 200 whose degree of overlap exceeds a predetermined threshold. However, in a case where the determination is performed based on this criterion, depending on the setting of the threshold, it may be not possible to identify the display section 200 in which the misplacement occurs. For example, when the degree of overlap "0.8" is the threshold, the degree of overlap of the article area 210C does not exceed the threshold in either of the display sections 200C and 200D when overlapping the display section 200C at the degree of overlap "0.3" and overlapping the display section 200D at the degree of overlap "0.7".

Therefore, in the present embodiment, a "crossing coefficient α" for adjusting the threshold in accordance with the number of the crossed display sections 200 is used. For example, when the degree of overlap of the article area 210C with respect to the display section 200D is not "1.0", the misplacement determination unit 106 may perform the following determination. That is, when the degree of overlap of the article area 210C with respect to the display section 200D is equal to or greater than a value obtained by multiplying the predetermined crossing coefficient α by the threshold T, the misplacement determination unit 106 may determine that the article area 210C is misplaced in the display section 200D. In addition, when the degree of overlap of the article area 210C with respect to the display section 200D is smaller than the value obtained by multiplying the threshold T by the crossing coefficient α, the misplacement determination unit 106 may not determine that the article area 210C is misplaced in the display section 200D. The crossing coefficient α may be a constant. Alternatively, the crossing coefficient α may be a variable that changes according to the number of display sections 200 overlapped with the article area 210. For example, the crossing coefficient α may be "1/2" when the article area 210 overlaps two display sections 200, and the crossing coefficient α may be "1/3" when the article area 210 overlaps three display sections 200.

For example, in the case of (e) of Fig. 10B, the article area 210C is not to be placed in the display section 200D. Since the degree of overlap of the article area 210C with respect to the display section 200D is "1.0", the misplacement determination unit 106 may determine that the article area 210C is misplaced.

For example, in the case of (g) of Fig. 10B, the article area 210E is not to be placed in the display section 200D. When the crossing coefficient α is set to "0.5", the degree of overlap "0.7" of the article area 210E with respect to the display section 200D is equal to or greater than a value "0.45" obtained by multiplying the crossing coefficient α "0.5" by the threshold T "0.8". Therefore, the misplacement determination unit 106 may determine that the article area 210E is misplaced.

For example, when the degree of overlap of the article area 210E with respect to the display section 200D is "0.2", the degree of overlap "0.2" is smaller than a value "0.45" obtained by multiplying the crossing coefficient α "0.5" by the threshold T "0.8". In this case, the misplacement determination unit 106 may not perform the determination on the article area 210E.

In this way, the misplacement determination unit 106 can completely associate the article areas 210 with the display sections 200. Therefore, it is possible to notify the store clerk or the like of the display sections 200 in which misplacement or the like occurs. In a case where misplacement occurs, when only the information on the article area 210 is notified with respect to an article 2 misplaced in a place far away from the original display place, it is still difficult for a store clerk or the like to recognize where the misplacement occurs. Therefore, in the present exemplary embodiment, a process of associating an article area 210 in which misplacement occurs with any one of the display sections 200 is performed. Accordingly, it is possible to notify the store clerk or the like of the position (display section 200) in which the misplacement occurs, and thus it is possible to correct the misplacement more easily.

In the above description, the adjustment is performed by multiplying the threshold T by the crossing coefficient α so as not to generate a state in which the article area 210C is not associated with any display section 200, but the same result can be obtained by using another method such as directly increasing or decreasing the threshold per se. In addition, if it is sufficient to only notify which article 2 is misplaced, the above-described process of "Case where Article Area is not to be Displayed in Display Section to be Processed" is not necessary.

The determination result by the misplacement determination unit 106 is not limited to the correct placement, the misplacement, and the suspectable placement described above. For example, the misplacement determination unit 106 may take the degree of overlap of the article area 210 with respect to the display section 200 and/or the intermediate section 201 as the determination result. For example, when the article area 210 is present in the intermediate section 201, the misplacement determination unit 106 may take such fact as the determination result. For example, when the article area 210 protrudes from the display section 200, the misplacement determination unit 106 may take such fact as the determination result. In this case, it is possible to simultaneously display whether protruding, and whether being correct placement, misplacement, or suspectable placement. As described above, in the present embodiment, even if protrusion is detected, it may be determined that the placement is correct placement under a predetermined condition. Therefore, a situation such as "protrusion occurs but is determined as correct placement" may occur. By notifying the store clerk or the like of such information, the store clerk can evaluate whether the strictness of the determination by the misplacement determination unit 106 is appropriate. In particular, in a case where the store clerk can manually adjust the parameters that affect the determination of whether the placement is correct placement, it is possible to more accurately determine whether the adjustment is necessary.

### <Modification>

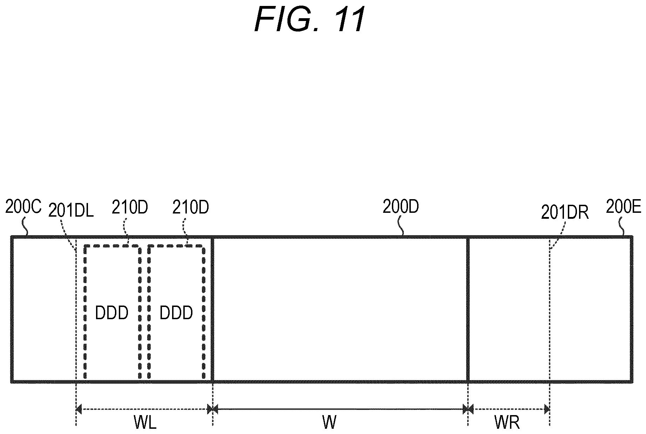

Fig. 11 is a diagram for illustrating a first modification of the misplacement determination.

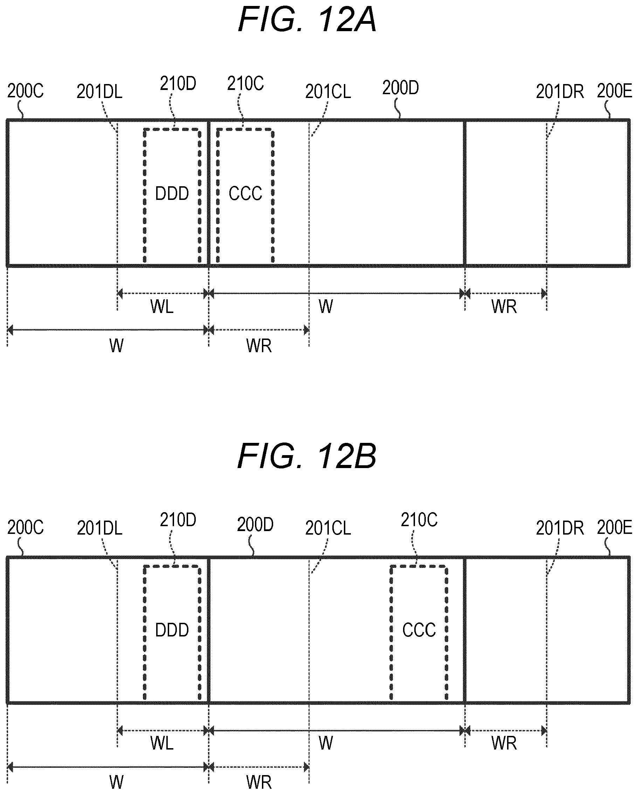

When one article area 210D is present in the intermediate section 201DL, the misplacement determination unit 106 may determine that the article area 210D is not misplaced, and when a plurality of article areas 210D are present in the intermediate section 201DL as illustrated in Fig. 12, the misplacement determination unit 106 may determine that the plurality of article areas 210D are misplaced.

Figs. 12A and 12B are diagrams for illustrating a second modification of the misplacement determination.

In the case of the article areas 210 existing in the intermediate section 201, the misplacement determination unit 106 may still determine that these article areas 210 are misplaced when these article areas 210 are swapped between display sections 200 adjacent to each other.

For example, as shown in Fig. 12A, the article area 210D is present in the intermediate section 201DL, and the article area 210C is present in the intermediate section 201CR. In this case, since the placement of the article areas 210D and 210C is swapped between the display sections 200D and 200C adjacent to each other, the misplacement determination unit 106 may determine that the article areas 210D and 210C are misplaced. In the determination based on one display section 200 and the intermediate section 201 corresponding thereto, it is not possible to distinguish between a case where the entire display is slightly deviated to the left or right and a case where the articles 2 are swapped between the adjacent display sections 200. This is because, in either case, it is only known that the correct article 2 is included in the intermediate section 201. However, the swap of the article areas 210 is misplacement that is relatively likely to occur in a case where a store clerk or the like who displays the article 2 erroneously recognizes the order of placement. Therefore, in the present modification, it is determined that misplacement occurs in a case where the article areas 210 are swapped between the display sections 200 adjacent to each other, and thus misplacement that is missed when focusing on one display section 200 is detected.

When the article areas 210C and 210D are swapped between the display sections 200C and 200D adjacent to each other as illustrated in Fig. 12B, the misplacement determination unit 106 may determine that the article areas 210C and 210D are misplaced regardless of the positional correlation between the intermediate sections 201DL and 201CL and the article areas 210C and 210D. This is because it is misplacement without the need of checking the positional correlation with the intermediate sections 201D1 and 201CL at the time when the swap is confirmed.

In the above description, both the swapped article areas 210C and 210D are determined as misplaced, but one of the article areas 210C and 210D may be determined as misplaced alone.

### <Hardware Configuration>

The embodiments according to the present disclosure have been described in detail with reference to the drawings, but the components 101 to 108 of the monitoring device 100 described above may be implemented with a computer program.

Fig. 13 is a diagram illustrating a hardware configuration of a computer for implementing functions of the monitoring device 100 by a program.

The computer 1000 includes an input device 1001 such as a keyboard, a mouse, or a touch pad, an output device 1002 such as a display or a speaker, a central processing unit (CPU) 1003, a graphics processing unit (GPU) 1004, a read only memory (ROM) 1005, a random access memory (RAM) 1006, a storage device 1007 such as a hard disk device or a solid state drive (SSD), a reading device 1008 that reads information from a recording medium such as a digital versatile disk read only memory (DVD-ROM) or a universal serial bus (USB) memory, and a transmission/reception device 1009 that performs communication via a communication network. The respective units are connected to each other via a bus 1010.

The reading device 1008 reads a program for implementing the function of the monitoring device 100 from a recording medium recording the program, and stores the program in the storage device 1007. Alternatively, the transmission/reception device 1009 communicates with a server device connected to the communication network, and causes the storage device 1007 to store a program downloaded from the server device for implementing the function of the monitoring device 100.

The CPU 1003 copies the program stored in the storage device 1007 to the RAM 1006, and sequentially reads and executes instructions included in the program from the RAM 1006, thereby implementing the function of the monitoring device 100.

Each functional block used in the description of the above embodiment is typically implemented as an LSI which is an integrated circuit. These function blocks may be individually integrated into one chip, or may be integrated into one chip so as to include a part or all of them. Here, the term "LSI" is used, but the term "IC", "system LSI", "super LSI", or "ultra LSI" may be used depending on the degree of integration.

### <Other Modifications>

In the above-described embodiment, one of the intermediate section 201DL or the intermediate section 201DR may be provided alone. For example, when the display section 200 is located at the right end of the display shelf 10, there is a very low possibility that acceptable misplacement occurs in the right intermediate section 201DR, and thus the left intermediate section 201DL may be provided alone.

In the above-described embodiment, the example of the display shelf 10 in which the articles 2 are displayed in the horizontal direction for each shelf stage 11 has been described, but the present disclosure can also be applied to display in a form different from that of the display shelf 10. For example, the present invention can also be applied to determination of misplacement of articles 2 placed in a plane or determination of misplacement of articles 2 displayed while being stacked in the vertical direction. In the case of display in the vertical direction, the intermediate section 201 may be set at a position adjacent to the display section 200 in the upper-lower direction. In the case of planar display, the intermediate section 201 may be set at a position adjacent to the display section 200 in the vertical and horizontal directions on the plane. In addition, in a case where the range for allowing the misplacement is to be widened, the intermediate section 201 may also be set at a position adjacent to the intermediate section 201 in an oblique direction.

### (Summary of Present Disclosure)

A monitoring device (100) according to an aspect of the present disclosure for monitoring placement of an article (2) includes: an image acquisition unit (102) configured to acquire an image (121) in which the article is imaged when the article is placed; a display section setting unit (103) configured to set a display section (200) in the image, the display section being a section in which the article is to be displayed; an intermediate section setting unit (104) configured to set an intermediate section (201) adjacent to the display section in the image, the intermediate section being a section used for determining misplacement of the article; an article detection unit (105) configured to detect an article area (210) from the image, the article area being an image area of the article; and a misplacement determination unit (106) configured to determine whether the detected article area is misplaced in a correlation with the display section based on a positional correlation between the article area and the intermediate section in a case where at least a part of the article area does not overlap the display section.

According to this configuration, when at least a part of the article area does not overlap the display section, it is determined whether the article area is misplaced in the correlation with the display section based on the positional correlation between the article area and the intermediate section set adjacent to the display section. Therefore, it is possible to flexibly control the determination of the misplacement by adjusting the setting of the intermediate section.

The misplacement determination unit may determine that the article area is not misplaced in the correlation with the display section when the entire article area overlaps a combined section obtained by combining the display section and the intermediate section.

According to this configuration, an article area that protrudes from the display section but does not protrude from the intermediate section is determined as not misplaced. Therefore, it is possible to flexibly control the determination of the misplacement by adjusting the setting of the intermediate section.

The misplacement determination unit may determine that the article area is not misplaced in the correlation with the display section when at least a part of the article area overlaps a combined section obtained by combining the display section and the intermediate section.

According to this configuration, an article area that protrudes from the display section but at least partially overlaps the intermediate section is determined as not misplaced. Therefore, it is possible to flexibly control the determination of the misplacement by adjusting the setting of the intermediate section.

The misplacement determination unit may determine a possibility of the article area being misplaced in the correlation with the display section based on a ratio of overlap of the article area with respect to the display section and the intermediate section.

According to this configuration, the possibility of misplacement of the article area is determined based on the ratio of overlap of the article area with respect to the display section and the intermediate section. Therefore, it is possible to flexibly control the determination of the misplacement by adjusting the determination criterion for the ratio of overlap.

The misplacement determination unit may determine that the article area is not misplaced in the correlation with the display section when a first degree of overlap is equal to or greater than a second degree of overlap, the first degree of overlap being a degree of overlap of the article area with respect to the display section, the second degree of overlap being a degree of overlap of the article area with respect to the intermediate section.

According to this configuration, the determination of misplacement is performed in accordance with the degree of overlap of the article area with respect to the display section. Therefore, it is possible to more flexibly control the determination of the misplacement by adjusting the threshold for the degree of overlap.

The misplacement determination unit may determine that the article area is suspected as being misplaced in the correlation with the display section when a first degree of overlap is smaller than a second degree of overlap, the first degree of overlap being a degree of overlap of the article area with respect to the display section, the second degree of overlap being a degree of overlap of the article area with respect to the intermediate section.

According to this configuration, the determination of suspect of misplacement is performed in accordance with the degree of overlap of the article area with respect to the display section. Therefore, it is possible to more flexibly control the determination of the misplacement by adjusting the threshold for the degree of overlap.

When the intermediate section includes at least two article areas, the misplacement determination unit may determine that the at least two article areas are misplaced in the correlation with the display section.

According to this configuration, the article area is determined as misplaced in accordance with the number of article areas included in the intermediate section. Therefore, it is possible to flexibly control the determination of the misplacement in accordance with the number of article areas included in the intermediate section.

When it is detected that the article area of the article to be displayed in the display section and an article area of an article to be displayed in another display section adjacent to the display section are swapped in the correlation with the display section and the correlation with the other display section, the misplacement determination unit may determine that the article area is misplaced in the correlation with the display section regardless of the positional correlation between the article area and the intermediate section.

According to this configuration, when article areas are swapped between adjacent display sections, the article areas are determined as misplaced. As a result, it is possible to detect misplacement that may be missed when focusing on one display section.

The intermediate section setting unit may set a width of the intermediate section overlapping another display section adjacent to the display section to a width not exceeding that of the other display section. The intermediate section setting unit may set the width of the intermediate section overlapping the other display section to a width equal to that of the other display section.

According to this configuration, the width of the intermediate section overlapping the other display section adjacent to the display section is set so as not to exceed the width of the other display section or to be the same as the width of the other display section. Accordingly, for example, when an intermediate section set up to another display section that is second-adjacent to a display section and an article to be placed in the display section is placed in the other display section that is second adjacent to the display section, it is possible to prevent determination as not misplaced. In other words, it is possible to prevent output of a determination result of misplacement against the human sense.

The misplacement determination unit may determine a display section corresponding to the article area, and output a determination result of misplacement for the article area as a determination result of misplacement for the display section corresponding to the article area.

According to this configuration, the determination result of the misplacement of the article area is output as the determination result of the misplacement of the display section corresponding to the article area. In this way, it is possible to notify, for example, the store clerk of the misplaced display section.

Although the embodiment has been described above with reference to the accompanying drawings, the present disclosure is not limited to such an example.

The present application is based on a Japanese patent application (Japanese Patent Application No. 2020-103135) filed on June 15, 2020.

### INDUSTRIAL APPLICABILITY

The technology of the present disclosure is useful for monitoring a placement state of an article.

### REFERENCE SIGNS LIST

- 2: article
- 10: display shelf
- 11: shelf stage
- 12: shelf label
- 20: monitoring system
- 21: camera device
- 22: communication network
- 100: monitoring device
- 101: information storage unit
- 102: image acquisition unit
- 103: display section setting unit
- 104: intermediate section setting unit
- 105: article detection unit
- 106: misplacement determination unit
- 107: overlap analysis unit
- 108: misplacement notification unit
- 121: shelf image
- 122: shelf allocation information
- 123: display section information
- 124: intermediate section information
- 125: article detection information
- 126: overlap analysis information
- 127: misplacement information
- 200: display section
- 201: intermediate section
- 210: article area
- 230: margin section
- 1000: computer
- 1001: input device
- 1002: output device
- 1003: CPU
- 1004: GPU
- 1005: ROM
- 1006: RAM
- 1007: storage device
- 1008: reading device
- 1009: transmission/reception device
- 1010: bus

## Claims

1. A monitoring device for monitoring placement of an article comprising:
- an image acquisition unit (102) configured to acquire an image in which the article (2; 2A - 2E) is imaged when the article (2; 2A - 2E) is placed;
- a display section setting unit (103) configured to set a display section (200) in the image, the display section (200) being a section in which the article (2; 2A - 2E) is to be displayed;
- an intermediate section setting unit (104) configured to set an intermediate section (201) adjacent to the display section (200) in the image, the intermediate section (201) being a section used for determining misplacement of the article (2; 2A - 2E);
- an article detection unit (105) configured to detect an article area from the image, the article area being an image area of the article (2; 2A - 2E); and
- a misplacement determination unit (106) configured to determine whether the detected article area (210) is misplaced in a correlation with the display section (200) based on a positional correlation between the article area (210) and the intermediate section (201) in a case where at least a part of the detected article area (210) does not overlap the display section (200).

2. The monitoring device according to claim 1, wherein
the misplacement determination unit determines that the article area is not misplaced in the correlation with the display section when the entire article area overlaps a combined section obtained by combining the display section and the intermediate section.

3. The monitoring device according to claim 1, wherein
the misplacement determination unit determines that the article area is not misplaced in the correlation with the display section when at least a part of the article area overlaps the combined section obtained by combining the display section and the intermediate section.

4. The monitoring device according to claim 1, wherein
the misplacement determination unit determines whether the article area is misplaced in the correlation with the display section based on a degree of overlap of the article area with respect to the display section and the intermediate section.

5. The monitoring device according to claim 4, wherein
the misplacement determination unit determines that the article area is not misplaced in the correlation with the display section when a first degree of overlap is equal to or greater than a second degree of overlap, the first degree of overlap being a degree of overlap of the article area with respect to the display section, the second degree of overlap being a degree of overlap of the article area with respect to the intermediate section.

6. The monitoring device according to claim 4, wherein
the misplacement determination unit determines that the article area is suspected as being misplaced in the correlation with the display section when a first degree of overlap is smaller than a second degree of overlap, the first degree of overlap being a degree of overlap of the article area with respect to the display section, the second degree of overlap being a degree of overlap of the article area with respect to the intermediate section.

7. The monitoring device according to claim 2, wherein
when at least two article areas are included in the intermediate section, the misplacement determination unit determines that the at least two article areas are misplaced in the correlation with the display section.

8. The monitoring device according to claim 1, wherein
when it is detected that the article area of the article to be displayed in the display section and an article area of an article to be displayed in another display section adjacent to the display section are swapped in the correlation with the display section and the correlation with the other display section, the misplacement determination unit determines that the article area is misplaced in the correlation with the display section regardless of the positional correlation between the article area and the intermediate section.

9. The monitoring device according to claim 1, wherein
the intermediate section setting unit sets a width of the intermediate section overlapping another display section adjacent to the display section to a width not exceeding a width of the other display section.

10. The monitoring device according to claim 9, wherein
the intermediate section setting unit sets the width of the intermediate section overlapping the other display section to a width equal to a width of the other display section.

11. The monitoring device according to claim 1, wherein
the misplacement determination unit determines a display section corresponding to the article area, and outputs a determination result of misplacement for the article area as a determination result of misplacement for the display section corresponding to the article area.

12. A monitoring method for monitoring placement of an article by a device, the monitoring method comprising:
acquiring an image in which the article is imaged when the article is placed;
setting a display section in the image, the display section being a section in which the article is to be displayed;
setting an intermediate section adjacent to the display section in the image, the intermediate section being a section used for determining misplacement of the article;
detecting an article area from the image, the article area being an image area of the article; and
determining whether the detected article area is misplaced in a correlation with the display section based on a positional correlation between the article area and the intermediate section in a case where at least a part of the article area does not overlap the display section.

13. A computer program for monitoring placement of an article, the computer program causing a computer to execute a process of:
acquiring an image in which the article is imaged when the article is placed;
setting a display section in the image, the display section being a section in which the article is to be displayed;
setting an intermediate section adjacent to the display section in the image, the intermediate section being a section used for determining misplacement of the article;
detecting an article area from the image, the article area being an image area of the article; and
determining whether the detected article area is misplaced in a correlation with the display section based on a positional correlation between the article area and the intermediate section in a case where at least a part of the article area does not overlap the display section.

## Patentansprüche

1. Überwachungsvorrichtung zur Überwachung der Platzierung eines Gegenstandes, umfassend:
- eine Bilderfassungseinheit (102), die derart ausgestaltet ist, dass sie ein Bild erfasst, in dem der Artikel (2; 2A - 2E) abgebildet ist, wenn der Artikel (2; 2A - 2E) platziert wird;
- eine Anzeigeabschnitt-Einstelleinheit (103), die ausgestaltet ist, einen Anzeigeabschnitt (200) in dem Bild einzustellen, wobei der Anzeigeabschnitt (200) ein Abschnitt in dem Bild ist, in dem der Artikel (2; 2A - 2E) angezeigt werden soll;
- eine Zwischenabschnitt-Einstelleinheit (104), die ausgestaltet ist, einen Zwischenabschnitt (201) angrenzend an den Anzeigeabschnitt (200) in dem Bild einzustellen, wobei der Zwischenabschnitt (201) ein Abschnitt ist, der zum Bestimmen einer Fehlplatzierung des Artikels (2; 2A - 2E) benutzt wird;
- eine Artikelerkennungseinheit (105), die ausgestaltet ist, einen Artikelbereich aus dem Bild zu erkennen, wobei der Artikelbereich ein Bildbereich des Artikels (2; 2A - 2E) ist; und
- eine Fehlplatzierungsbestimmungseinheit (106), die ausgestaltet ist, zu bestimmen, ob der erfasste Artikelbereich (210) in einer Korrelation mit dem Anzeigeabschnitt (200) auf der Grundlage einer Positionskorrelation zwischen dem Artikelbereich (210) und dem Zwischenabschnitt (201) fehlplatziert ist, in einem Fall, in dem mindestens ein Teil des erkannten Artikelbereichs (210) den Anzeigeabschnitt (200) nicht überlappt.

2. Überwachungsvorrichtung nach Anspruch 1, wobei
die Fehlplatzierungsbestimmungseinheit bestimmt, dass der Artikelbereich in der Korrelation mit dem Anzeigeabschnitt nicht fehlplatziert ist, wenn der gesamte Artikelbereich einen kombinierten Abschnitt überlappt, der durch die Kombination des Anzeigeabschnitts und des Zwischenabschnitts erhalten wird.

3. Überwachungsvorrichtung nach Anspruch 1, wobei
die Fehlplatzierungsbestimmungseinheit bestimmt, dass der Artikelbereich in der Korrelation mit dem Anzeigeabschnitt nicht fehlplatziert ist, wenn zumindest ein Teil des Artikelbereichs den kombinierten Abschnitt überlappt, der durch die Kombination des Anzeigeabschnitts und des Zwischenabschnitts erhalten wird.

4. Überwachungsvorrichtung nach Anspruch 1, wobei
die Fehlplatzierungsbestimmungseinheit bestimmt, ob der Artikelbereich in der Korrelation mit dem Anzeigeabschnitt fehlplatziert ist, auf der Grundlage eines Überlappungsgrads des Artikelbereichs in Bezug auf den Anzeigeabschnitt und den Zwischenabschnitt.

5. Überwachungsvorrichtung nach Anspruch 4, wobei
die Fehlplatzierungsbestimmungseinheit bestimmt, dass der Artikelbereich nicht in der Korrelation mit dem Anzeigeabschnitt fehlplatziert ist, wenn ein erster Überlappungsgrad gleich oder größer ist als ein zweiter Überlappungsgrad, wobei der erste Überlappungsgrad ein Überlappungsgrad des Artikelbereichs in Bezug auf den Anzeigeabschnitt ist, wobei der zweite Überlappungsgrad ein Überlappungsgrad des Artikelbereichs in Bezug auf den Zwischenabschnitt ist.

6. Überwachungsvorrichtung nach Anspruch 4, wobei
die Fehlplatzierungsbestimmungseinheit bestimmt, dass der Verdacht besteht, dass der Artikelbereich in der Korrelation mit dem Anzeigeabschnitt fehlplatziert ist, wenn ein erster Überlappungsgrad kleiner ist als ein zweiter Überlappungsgrad, wobei der erste Überlappungsgrad ein Überlappungsgrad des Artikelbereichs in Bezug auf den Anzeigeabschnitt ist, wobei der zweite Überlappungsgrad ein Überlappungsgrad des Artikelbereichs in Bezug auf den Zwischenabschnitt ist.

7. Überwachungsvorrichtung nach Anspruch 2, wobei
wenn mindestens zwei Artikelbereiche in dem Zwischenabschnitt enthalten sind, die Fehlplatzierungsbestimmungseinheit bestimmt, dass die mindestens zwei Artikelbereiche in der Korrelation mit dem Anzeigeabschnitt fehlplatziert sind.

8. Überwachungsvorrichtung nach Anspruch 1, wobei
wenn erkannt wird, dass der Artikelbereich des in dem Anzeigeabschnitt abzubildenden Artikels und ein Artikelbereich eines in einem anderen, an den Anzeigeabschnitt angrenzenden Anzeigeabschnitt abzubildenden Artikels, in der Korrelation mit dem Anzeigeabschnitt und in der Korrelation mit dem anderen Anzeigeabschnitt vertauscht sind, die Fehlplatzierungsbestimmungseinheit bestimmt, dass der Artikelbereich unabhängig von der Positionskorrelation zwischen dem Artikelbereich und dem Zwischenabschnitt in der Korrelation mit dem Anzeigeabschnitt fehlplatziert ist.

9. Überwachungsvorrichtung nach Anspruch 1, wobei
die Zwischenabschnitts-Einstelleinheit eine Breite des Zwischenabschnitts, der einen anderen, an den Anzeigeabschnitt angrenzenden Anzeigeabschnitt überlappt, auf eine Breite einstellt, die eine Breite des anderen Anzeigeabschnitts nicht überschreitet.

10. Überwachungsvorrichtung nach Anspruch 9, wobei
die Zwischenabschnitts-Einstelleinheit die Breite des Zwischenabschnitts, der den anderen Anzeigeabschnitt überlappt, auf eine Breite einstellt, die gleich einer Breite des anderen Anzeigeabschnitts ist.

11. Überwachungsvorrichtung nach Anspruch 1, wobei
die Fehlplatzierungsbestimmungseinheit einen Anzeigeabschnitt bestimmt, der dem Artikelbereich entspricht, und ein Bestimmungsergebnis einer Fehlplatzierung für den Artikelbereich als ein Bestimmungsergebnis einer Fehlplatzierung für den dem Artikelbereich entsprechenden Anzeigeabschnitt ausgibt.

12. Überwachungsverfahren zum Überwachen der Platzierung eines Gegenstandes durch eine Vorrichtung, wobei das Überwachungsverfahren umfasst:
Erfassen eines Bildes, in dem der Artikel abgebildet ist, wenn der Artikel platziert wird;
Einstellen eines Anzeigeabschnitts in dem Bild, wobei der Anzeigeabschnitt ein Abschnitt ist, in dem der Artikel angezeigt werden soll;
Einstellen eines Zwischenabschnitts neben dem Anzeigeabschnitt in dem Bild, wobei der Zwischenabschnitt ein Abschnitt ist, der zum Bestimmen einer Fehlplatzierung des Artikels verwendet wird;
Erkennen eines Artikelbereichs aus dem Bild, wobei der Artikelbereich ein Bildbereich des Artikels ist; und
Bestimmen, ob der erfasste Artikelbereich in einer Korrelation mit dem Anzeigeabschnitt fehlplatziert ist, auf der Grundlage einer Positionskorrelation zwischen dem Artikelbereich und dem Zwischenabschnitt, in einem Fall, in dem mindestens ein Teil des Artikelbereichs den Anzeigeabschnitt nicht überlappt.

13. Computerprogramm zur Überwachung der Platzierung eines Artikels, wobei das Computerprogramm einen Computer veranlasst, einen Prozess auszuführen aus:
Erfassen eines Bildes, in dem der Artikel abgebildet ist, wenn der Artikel platziert wird;
Einstellen eines Anzeigeabschnitts in dem Bild, wobei der Anzeigeabschnitt ein Abschnitt ist, in dem der Artikel angezeigt werden soll;
Einstellen eines Zwischenabschnitts neben dem Anzeigeabschnitt in dem Bild, wobei der Zwischenabschnitt ein Abschnitt ist, der zum Bestimmen einer Fehlplatzierung des Artikels verwendet wird;
Erkennen eines Artikelbereichs aus dem Bild, wobei der Artikelbereich ein Bildbereich des Artikels ist; und
Bestimmen, ob der erfasste Artikelbereich in einer Korrelation mit dem Anzeigeabschnitt fehlplatziert ist, auf der Grundlage einer Positionskorrelation zwischen dem Artikelbereich und dem Zwischenabschnitt, in einem Fall, in dem mindestens ein Teil des Artikelbereichs den Anzeigeabschnitt nicht überlappt.

## Revendications

1. Dispositif de surveillance destiné à surveiller le placement d'un article, comprenant :
- une unité d'acquisition d'image (102) configurée pour acquérir une image dans laquelle l'article (2 ; 2A - 2E) est visualisé lorsque l'article (2 ; 2A - 2E) est placé ;
- une unité de réglage (103) de section d'affichage configurée pour régler une section d'affichage (200) dans l'image, la section d'affichage (200) étant une section dans laquelle l'article (2 ; 2A - 2E) doit être affiché ;
- une unité de réglage (104) de section intermédiaire configurée pour régler une section intermédiaire (201) adjacente à la section d'affichage (200) dans l'image, la section intermédiaire (201) étant une section utilisée pour déterminer un mauvais placement de l'article (2 ; 2A - 2E) ;
- une unité de détection (105) d'article configurée pour détecter une zone d'article à partir de l'image, la zone d'article étant une zone d'image de l'article (2 ; 2A - 2E) ; et
- une unité de détermination (106) de mauvais placement configurée pour déterminer si la zone d'article détectée (210) est mal placée ou non dans une corrélation avec la section d'affichage (200) sur la base d'une corrélation de position entre la zone d'article (210) et la section intermédiaire (201) dans un cas où au moins une partie de la zone d'article détectée (210) ne chevauche pas la section d'affichage (200).

2. Dispositif de surveillance selon la revendication 1,
l'unité de détermination de mauvais placement déterminant que la zone d'article n'est pas mal placée dans la corrélation avec la section d'affichage lorsque la totalité de la zone d'article chevauche une section combinée obtenue par combinaison de la section d'affichage et de la section intermédiaire.

3. Dispositif de surveillance selon la revendication 1,
l'unité de détermination de mauvais placement déterminant que la zone d'article n'est pas mal placée dans la corrélation avec la section d'affichage lorsqu'au moins une partie de la zone d'article chevauche la section combinée obtenue par combinaison de la section d'affichage et de la section intermédiaire.

4. Dispositif de surveillance selon la revendication 1,
l'unité de détermination de mauvais placement déterminant si la zone d'article est mal placée ou non dans la corrélation avec la section d'affichage sur la base d'un degré de chevauchement de la zone d'article par rapport à la section d'affichage et à la section intermédiaire.

5. Dispositif de surveillance selon la revendication 4,
l'unité de détermination de mauvais placement déterminant que la zone d'article n'est pas mal placée dans la corrélation avec la section d'affichage lorsqu'un premier degré de chevauchement est égal ou supérieur à un second degré de chevauchement, le premier degré de chevauchement étant un degré de chevauchement de la zone d'article par rapport à la section d'affichage, le second degré de chevauchement étant un degré de chevauchement de la zone d'article par rapport à la section intermédiaire.

6. Dispositif de surveillance selon la revendication 4,
l'unité de détermination de mauvais placement déterminant que la zone d'article est suspectée comme étant mal placée dans la corrélation avec la section d'affichage lorsqu'un premier degré de chevauchement est inférieur à un second degré de chevauchement, le premier degré de chevauchement étant un degré de chevauchement de la zone d'article par rapport à la section d'affichage, le second degré de chevauchement étant un degré de chevauchement de la zone d'article par rapport à la section intermédiaire.

7. Dispositif de surveillance selon la revendication 2, où
lorsqu'au moins deux zones d'article sont incluses dans la section intermédiaire, l'unité de détermination de mauvais placement détermine que lesdites au moins deux zones d'article sont mal placées dans la corrélation avec la section d'affichage.

8. Dispositif de surveillance selon la revendication 1, où
lorsqu'il est détecté que la zone d'article de l'article à afficher dans la section d'affichage et une zone d'article d'un article à afficher dans une autre section d'affichage adjacente à la section d'affichage sont permutées dans la corrélation avec la section d'affichage et la corrélation avec l'autre section d'affichage, l'unité de détermination de mauvais placement détermine que la zone d'article est mal placée dans la corrélation avec la section d'affichage indépendamment de la corrélation de position entre la zone d'article et la section intermédiaire.

9. Dispositif de surveillance selon la revendication 1, où
l'unité de réglage de section intermédiaire réglant une largeur de la section intermédiaire chevauchant une autre section d'affichage adjacente à la section d'affichage à une largeur ne dépassant pas une largeur de l'autre section d'affichage.

10. Dispositif de surveillance selon la revendication 9,
l'unité de réglage de section intermédiaire réglant la largeur de la section intermédiaire chevauchant l'autre section d'affichage à une largeur égale à une largeur de l'autre section d'affichage.

11. Dispositif de surveillance selon la revendication 1, où
l'unité de détermination de mauvais placement déterminant une section d'affichage correspondant à la zone d'article et délivrant un résultat de détermination de mauvais placement pour la zone d'article en tant que résultat de détermination de mauvais placement pour la section d'affichage correspondant à la zone d'article.

12. Procédé de surveillance destiné à surveiller le placement d'un article par un dispositif, le procédé de surveillance comprenant :
l'acquisition d'une image dans laquelle l'article est visualisé lorsque l'article est placé ;
le réglage d'une section d'affichage dans l'image, la section d'affichage étant une section dans laquelle l'article doit être affiché ;
le réglage d'une section intermédiaire adjacente à la section d'affichage dans l'image, la section intermédiaire étant une section utilisée pour déterminer un mauvais placement de l'article ;
la détection d'une zone d'article à partir de l'image, la zone d'article étant une zone d'image de l'article ; et
la détermination du fait que la zone d'article détectée est mal placée ou non dans une corrélation avec la section d'affichage sur la base d'une corrélation de position entre la zone d'article et la section intermédiaire dans un cas où au moins une partie de la zone d'article ne chevauche pas la section d'affichage.

13. Programme informatique destiné à surveiller le placement d'un article, le programme informatique amenant un ordinateur à exécuter un processus de :
acquisition d'une image dans laquelle l'article est visualisé lorsque l'article est placé ;
réglage d'une section d'affichage dans l'image, la section d'affichage étant une section dans laquelle l'article doit être affiché ;
réglage d'une section intermédiaire adjacente à la section d'affichage dans l'image, la section intermédiaire étant une section utilisée pour déterminer un mauvais placement de l'article ;
détection d'une zone d'article à partir de l'image, la zone d'article étant une zone d'image de l'article ; et
détermination du fait que la zone d'article détectée est mal placée ou non dans une corrélation avec la section d'affichage sur la base d'une corrélation de position entre la zone d'article et la section intermédiaire dans un cas où au moins une partie de la zone d'article ne chevauche pas la section d'affichage.
